# DEMANDE DE BREVET EUROPEEN

(11) **EP 4 119 322 A1**
(43) Date de publication de la demande: **18.01.2023**
(21) Numéro de dépôt: 22184612.4
(22) Date de dépôt: 13.07.2022
(51) Int. Cl.: B29C 43/18, B32B 15/00, B29C 70/68, B29C 70/72, B29C 51/08, B29C 51/12, B60J 5/10

(54) **PROCÉDÉ DE MOULAGE D'UNE PIÈCE DE VÉHICULE AUTOMOBILE COMPRENANT UN INSERT MÉTALLIQUE**

(30) Priorité: 16.07.2021 FR 2107723
(71) Demandeur: Compagnie Plastic Omnium SE, 69007 Lyon (FR)
(72) Inventeur: LETERRIER, Franck, 01150 Sainte-Julie (FR); BARBIER, Pascal, 01150 Sainte-Julie (FR)
(74) Mandataire: LLR

(57) **Abrégé**

L'invention concerne un procédé de moulage d'une pièce de véhicule automobile (4), la pièce de véhicule automobile (4) étant réalisée en matière plastique thermodurcissable et comprenant au moins un insert métallique (2) ayant une forme lui permettant de s'étendre sensiblement dans toute l'épaisseur de la pièce de véhicule automobile (4), le procédé étant caractérisé en ce qu'il comprend les étapes suivantes :
- mise en place de l'insert métallique (2) et de la matière plastique thermodurcissable dans un moule, et
- moulage de la pièce de véhicule automobile (4) comprenant l'insert métallique (2) surmoulé, l'insert métallique (2) étant déformé au niveau d'au moins une zone d'affaiblissement mécanique (16) par la fermeture du moule pour le moulage de la pièce de véhicule automobile (4).

## Description

L'invention concerne le moulage de pièces de véhicule en matière thermodurcissable comprenant un renfort métallique, et plus particulièrement celui de renfort pour véhicule automobile.

Certains panneaux de carrosserie de véhicule automobile sont réalisés en matière plastique, et plus particulièrement en matière thermoplastique. On peut par exemple citer le cas d'un hayon de véhicule automobile comprenant un panneau interne, ou doublure, réalisé en matière thermoplastique, classiquement chargé de fibres de renfort, par exemple chargé de fibres de verre ou de talc pour accroître ses propriétés de résistance. Cela présente un avantage en termes de facilité de fabrication (moulage par injection) mais également en termes de poids final du hayon, qui sera léger.

Une doublure de hayon subit de nombreuses contraintes mécaniques lors de sa fabrication, principalement des déformations géométriques inhérentes au procédé de moulage, et des sollicitations mécaniques lors de son utilisation une fois assemblée sur le véhicule.

Afin de de mieux supporter les efforts mécaniques de fonctionnement sur véhicule, la doublure intérieure est généralement renforcée par des éléments de renfort en tôle obtenue par un procédé classique de découpe, emboutissage, poinçonnage. Ces éléments de renfort peuvent être surmoulés dans la matière thermoplastique de la doublure au niveau des zones charnières, rotules ou serrure, afin de pallier les différents efforts produits par les équipements (charnières, vérins, butées ou encore joint d'étanchéité) et qui génèrent des déformations. L'efficacité en robustesse du renfort surmoulé dépend de la qualité du couplage mécanique entre la pièce de carrosserie et le renfort.

Cependant, la fabrication de renfort métallique est le résultat de diverses opérations de découpe, pliage, emboutissage et soudure d'un ou plusieurs éléments en tôle et ces renforts représentent un poids encore important par rapport à l'allègement global attendu sur un hayon en plastique.

Alternativement, il est possible de réaliser des renforts en matière plastique thermodurcissable. Ces derniers présentent l'avantage d'être plus légers par rapport à des renforts métalliques. Ils sont classiquement surmoulés dans un panneau de carrosserie en matière thermoplastique. Cependant, ils sont par conséquent dépourvus de métal. Or, la présence de parties métalliques accessibles au niveau du renfort présente une voire plusieurs utilités. On peut par exemple citer les intérêts suivants :
- une partie métallique peut servir de renfort supplémentaire au niveau de zones extrêmement sollicitées comme par exemple la zone charnière (cela peut même s'avérer indispensable dans une zone charnière de hayon) : la partie métallique va alors servir à la fixation du hayon sur la structure du véhicule pour assurer une fonctionnalité optimale dans le temps, en procurant une interface locale de fixation de type « métal sur métal » ;
- un insert de renfort métallique peut être utilisé pour assurer une conductivité électrique dans la zone dans laquelle il est placé ; et
- un insert de renfort métallique peut permettre d'assurer une manipulation automatisée par un robot et/ou un maintien du renfort dans un moule d'un panneau de carrosserie en étant aimanté dans ce dernier. Cet insert est dès lors réalisé en acier pour permettre une telle aimantation.

Pour les raisons évoquées ci-dessus, il serait possible de rapporter une ou plusieurs pièces métalliques avant ou après surmoulage d'un renfort en matière thermodurcissable dans un panneau de carrosserie de véhicule automobile en matière thermoplastique. Cependant, cela nécessite une étape de reprise au niveau du renfort ou du panneau, ce qui implique une perte de temps de fabrication et une augmentation des coûts de fabrication.

Il pourrait dès lors être pertinent de prévoir le surmoulage de parties métalliques dans un renfort en matière thermodurcissable. Cependant cela se heurte à une problématique de positionnement de ces parties métalliques dans le moule du renfort.

En effet, le moulage en compression de matière thermodurcissable est particulier par rapport à un moulage par injection : les deux parties du moule ne sont pas refermées l'une sur l'autre dès le début du moulage ce qui ne permet pas de maintenir le renfort bloqué fermement entre le poinçon et la matrice du moule pendant tout le moulage.

De plus, l'épaisseur du renfort en matière thermodurcissable, par exemple réalisé en SMC (pour « Sheet *Molding Compound* »), moulé peut varier d'environ +/- 0,2 millimètres, cela étant dû à la nature même du moulage par compression. La partie métallique surmoulée pourrait dès lors ne pas occuper la position souhaitée voire même subir une déformation non souhaitée. Le résultat obtenu serait dès lors insatisfaisant.

Cette problématique n'est d'ailleurs pas propre aux renforts mais à toute pièce en matière plastique thermodurcissable comprenant au moins un insert métallique pour remplir les fonctions précitées.

L'invention a notamment pour but de fournir un procédé de moulage d'une pièce de véhicule automobile en matière thermodurcissable, par exemple un renfort d'un panneau de carrosserie de véhicule automobile, et comprenant au moins un insert métallique, procédé permettant d'assurer un positionnement optimal dudit insert métallique dans la pièce de véhicule automobile.

A cet effet, l'invention a pour objet un procédé de moulage d'une pièce de véhicule automobile, la pièce de véhicule automobile étant réalisée en matière plastique thermodurcissable et comprenant au moins un insert métallique ayant une forme lui permettant de s'étendre sensiblement dans toute l'épaisseur de la pièce de véhicule automobile, le procédé comprenant les étapes suivantes :
- mise en place de l'insert métallique et de la matière plastique thermodurcissable dans un moule,
- moulage de la pièce de véhicule automobile comprenant le renfort métallique surmoulé, le renfort métallique étant déformé au niveau d'au moins une zone d'affaiblissement mécanique par la fermeture du moule pour le moulage de la pièce de véhicule automobile.

Ainsi, l'insert métallique s'étendant dans toute l'épaisseur de la future pièce de véhicule automobile peut se déformer au niveau de zones déterminées si l'entrefer entre la matrice et le poinçon du moule en position fermée (qui correspond à l'épaisseur finale de la pièce moulée) est inférieur à la hauteur du renfort métallique avant moulage. Cela permet aussi d'envisager une accessibilité de l'insert métallique depuis la surface de la pièce de véhicule automobile moulée.

La présence de ces zones d'affaiblissement mécanique permet de s'assurer que l'insert métallique peut être déformé de manière contrôlée (i.e. au niveau de zones choisies ou d'une manière choisie et sous des contraintes et déformations maitrisées).

Suivant d'autres caractéristiques optionnelles du procédé de moulage prises seules ou en combinaison :
- le moule comprend au moins une première surface d'appui pour l'insert métallique, au moins une portion d'appui formant une partie de l'insert métallique glissant le long de la première surface d'appui lors de la déformation de l'insert métallique. L'insert métallique en déformation peut donc se déplacer relativement au moule de manière prévisible dans des zones dédiées à cela ;
- au moins une portion d'appui formant une partie de l'insert métallique et/ou une portion de liaison est déformée pendant la fermeture du moule ;
- la portion d'appui formant une partie de l'insert métallique et/ou la portion de liaison est déformée au niveau d'au moins une zone pré-pliée ;
- la portion d'appui formant une partie de l'insert métallique et/ou la portion de liaison est déformée au niveau d'au moins une zone de moindre épaisseur ; et
- le moule comprend au moins une seconde surface d'appui pour au moins une portion de compression de l'insert métallique, une face de cette portion de compression étant en contact directe avec la seconde surface d'appui lors de l'étape de moulage. Cela permet de conserver au moins une face visible à la surface de la pièce de véhicule automobile.

L'invention a également pour objet un insert métallique d'une pièce de véhicule automobile réalisée en matière plastique thermodurcissable, l'insert métallique comprenant au moins une zone d'affaiblissement mécanique agencée pour autoriser une déformation de l'insert métallique dans un moule.

Suivant d'autres caractéristiques optionnelles de l'insert métallique prises seules ou en combinaison :
- l'insert métallique comprend au moins une portion d'appui et au moins une portion de compression, s'étendant sur au moins deux niveaux différents ainsi qu'au moins une portion de liaison de la portion d'appui et de la portion de compression entre elles ;
- au moins une zone d'affaiblissement mécanique est formée au niveau de la portion de liaison et/ou de la portion d'appui ;
- au moins une zone de moindre épaisseur est formée au niveau de la portion de liaison et/ou de la portion d'appui ;
- au moins une zone pré-pliée est formée au niveau de la portion de liaison et/ou de la portion d'appui ;
- la portion de liaison s'étend entre la portion d'appui et la portion de compression sans être parallèle à celles-ci ;
- au moins une face de la portion d'appui et/ou de la portion de compression destinées à être en contact avec le moule ont la même forme que celle de la pièce de véhicule automobile. Cela permet à l'insert métallique d'épouser la forme du moule et d'avoir des faces apparentes sur la pièce moulée ; et
- l'insert métallique est un renfort métallique d'une pièce de véhicule automobile, de préférence en acier.

L'invention a également pour objet une pièce de véhicule automobile réalisée en matière thermodurcissable comprenant au moins un insert métallique selon l'invention.

Suivant d'autres caractéristiques optionnelles de la pièce de véhicule automobile prises seules ou en combinaison :
- au moins une face de l'insert métallique est visible à la surface de la pièce de véhicule. Cela permet de se servir de l'insert métallique comme d'une éventuelle interface de fixation d'un panneau comprenant la pièce de véhicule automobile à un élément métallique de la structure du véhicule, à assurer une conductivité électrique, ou encore à assurer un placement optimal de la pièce de véhicule surmoulé dans le panneau ;
- la face de l'insert métallique visible à la surface de la pièce de véhicule automobile comprend au moins un évidement traversant. Un ou des évidements traversants peuvent être utilisés pour la fixation d'un panneau sur la structure du véhicule ; et
- la pièce de véhicule automobile est un renfort, de préférence d'une doublure de hayon de véhicule automobile.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue de face d'un insert métallique selon un premier mode de réalisation de l'invention ;
[Fig. 2] la figure 2 est une vue en coupe de l'insert métallique de la figure 1 selon le plan de coupe I-I ;
[Fig. 3] la figure 3 est une vue en coupe d'un moule en position finale de fermeture d'une pièce de véhicule automobile selon l'invention comprenant l'insert métallique de la figure 1 et selon un plan de coupe similaire au plan de coupe I-I ;
[Fig. 4] la figure 4 est une vue en coupe d'un insert métallique avant moulage (partie gauche) et après moulage (partie droite) ;
[Fig. 5a] la figure 5a est une vue en coupe d'un insert métallique selon une première variante d'un second mode de réalisation de l'invention ;
[Fig. 5b] la figure 5b est une vue en coupe d'un insert métallique selon une seconde variante d'un second mode de réalisation de l'invention ;
[Fig. 5c] la figure 5c est une vue en coupe d'un insert métallique selon une troisième variante d'un second mode de réalisation de l'invention.

### Description détaillée

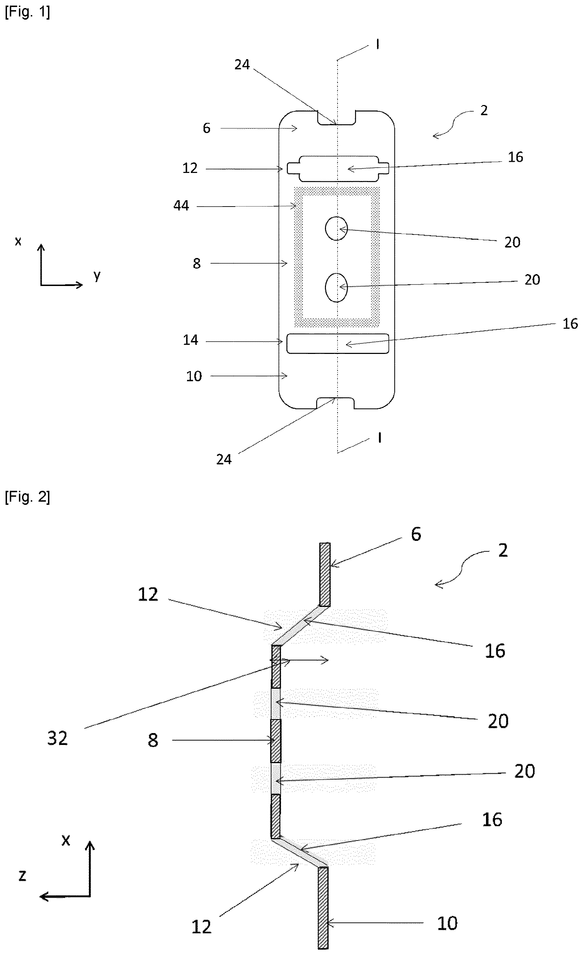

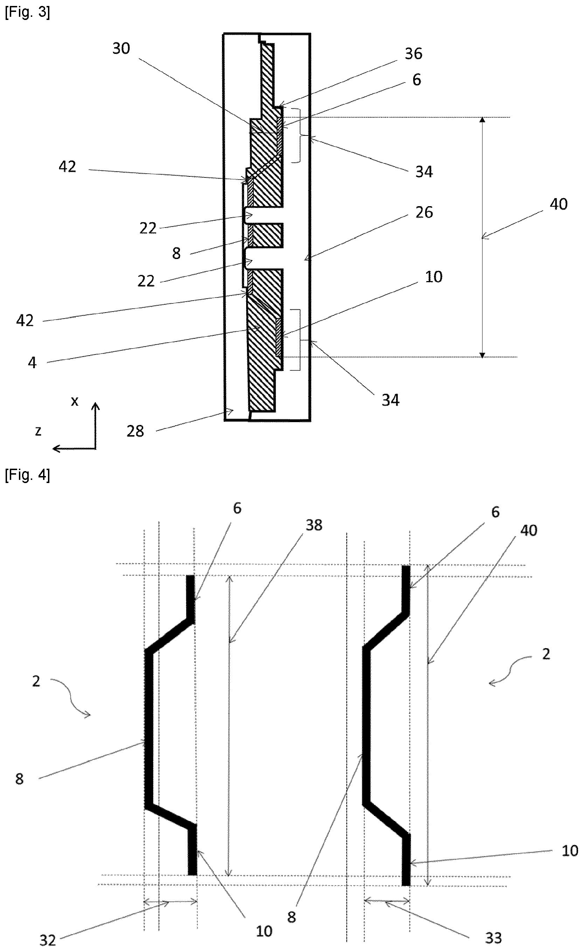

On se réfère désormais à la figure 1 illustrant un insert métallique 2 pour une pièce de véhicule automobile 4 (visible sur la figure 4 mais encore dans le moule, le moule étant en position finale de fermeture), par exemple un élément de fixation métallique d'un renfort en matière thermodurcissable pour un panneau de carrosserie.

Cet insert métallique 2 est destiné à être surmoulé dans la pièce de véhicule automobile 4 qui est réalisée en matière thermodurcissable. L'insert métallique 2 a une forme lui permettant de s'étendre sur toute la hauteur de la pièce de véhicule automobile 4 et est de préférence au moins partiellement accessible à la surface de la pièce de véhicule automobile 4. On entend par cela que, même si l'insert métallique 2 est d'une épaisseur inférieure à celle de la pièce de véhicule automobile 4, sa forme, par exemple étagée, lui permet de s'étendre sur toute la hauteur de la pièce de véhicule automobile 4. Cette accessibilité permet, comme expliqué précédemment, de remplir différentes fonctions comme par exemple l'utilisation comme interface de fixation d'un panneau de carrosserie à une structure de véhicule, l'utilisation en tant que conducteur électrique ou encore en tant qu'élément de positionnement de la pièce de véhicule automobile 4 dans un moule par aimantation (en collaboration avec un aimant permanent ou un électroaimant), l'insert métallique 2 étant pour cela réalisé en acier. Alternativement à l'acier, l'insert métallique 2 peut être réalisé en cuivre ou encore en aluminium. Le choix du matériau peut être dicté par la fonction de l'insert métallique 2 accessible ou encore dans une logique d'allègement de la pièce de véhicule automobile 4 moulée.

Dans l'exemple illustré aux figures 1 et 2 illustrant un premier mode de réalisation de l'invention), l'insert métallique 2 comprend trois portions planes, s'étendant dans deux plans différents (donc sur deux niveaux) et parallèles entre elles ainsi que deux portions de liaison 12 et 14 des portions planes, des zones d'affaiblissement mécanique 16 étant formées au niveau des portions de liaison 12 et 14 (le nombre de zones d'affaiblissement mécanique 16 ainsi que leur position et leur forme peut varier). Plus précisément, les zones d'affaiblissement mécanique 16 peuvent être formées par des trous ménagés au niveau des portions de liaison 12 et 14 et réalisés dans l'exemple illustré dans une direction transversale de l'insert métallique 2. Ces trous sont destinés à être traversés par de la matière thermodurcissable.

Bien entendu, les trois portions ci-dessus ne sont pas obligatoirement planes, leur nombre peut varier tout comme le nombre de plan dans lesquels elles s'étendent. L'insert métallique peut comprendre au moins une portion d'appui 6 ou 10 destinée à collaborer avec une première surface d'appui 34 d'une première partie de moule, dans l'exemple illustré (et décrit par la suite) d'une matrice 26 du moule, et au moins une portion de compression 8 destinée à collaborer avec une seconde surface d'appui 42 d'une seconde partie de moule, dans l'exemple illustré (et décrit par la suite) d'un poinçon 28 du moule. La matrice 26 et le poinçon 28 pourraient être inversées, la matrice 26 portant la seconde surface d'appui 42 tandis que le poinçon 28 porterait la première surface d'appui 34. Cela sera décrit par la suite.

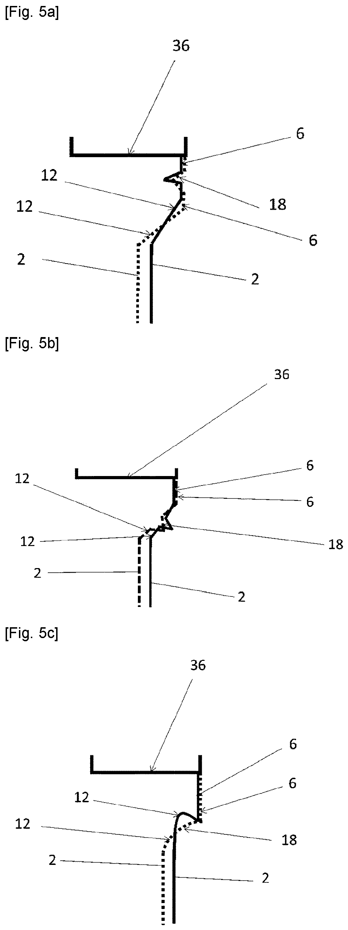

De plus, la ou les zones de faiblesse mécanique 16 ne sont pas obligatoirement positionnées au niveau des portions de liaison 12 et 14 (elles pourraient l'être au niveau des portions d'appui 6 ou 10) et ne sont pas obligatoirement formées de trous. Par exemple, les figures 5a à 5c illustrent trois variantes d'un second mode de réalisation dans lesquelles l'insert métallique 2 avant moulage (représenté en pointillés) comprend au moins une zone pré-pliée 18 au niveau de la portion de liaison 12 (figure 5b et 5c) ou au niveau de la portion d'appui 6 (figure 5b). Bien évidemment, ces zones pré-pliées peuvent avoir une forme variable (un pli marqué ou encore une zone courbée), un nombre variable et peuvent être portés par toute portion d'appui ou de liaison. Il en va de même pour la réalisation de trous, la figure 1 illustrant deux trous de formes différentes sur les portions de liaison 12 et 14. Enfin, les zones de faiblesse mécanique 16 peuvent être formées par des zones de moindre épaisseur.

En tout état de cause, la ou les zones d'affaiblissement mécanique 16 autorisent une déformation de l'insert métallique 2 lors du moulage de la pièce de véhicule automobile 4 comme cela sera vu par la suite, et sont donc positionnées au niveau de l'insert métallique 2 au niveau de zones de l'insert métallique 2 permettant l'obtention de cette déformation prévisible.

De manière préférentielle, l'insert métallique 2 comprend au moins un évidement traversant 20, deux dans l'exemple illustré sur les figures et ménagés dans la portion plane 8. Ces évidements traversants 20 sont destinés à être traversés par des bossages (par exemple des broches) de maintien 22 présents dans le moule de la pièce de véhicule automobile 4. Cette collaboration participe à la localisation précise de l'insert métallique 2 dans un moule. Les évidements traversants 20 pourraient également être ménagés au niveau des portions planes 6 et 10.

Les évidements traversants 20 peuvent avoir une forme complémentaire à celle des bossages de maintien 22, par exemple une forme ronde pour collaborer avec des bossages de maintien 22 tubulaires.

Il est également possible qu'un moins un des évidements traversants 20 ait une forme oblongue tout en collaborant avec un bossage de maintien 22 tubulaire. Cela permet d'assurer un guidage de l'insert métallique 2 en déformation dans un moule et dans une direction parallèle à un axe longitudinal de l'insert métallique 2.

Toujours dans une optique de guidage de l'insert métallique 2 en déformation dans un moule, ce dernier peut comprendre des fentes de guidage 24. Ces dernières sont agencées pour coopérer avec des ergots de guidage (non représentés) ménagés dans un moule. Les parois latérales de l'insert métallique 2 s'étendant dans une direction parallèle à un axe longitudinal de l'insert métallique 2 peuvent aussi permettre un guidage de ce dernier. Tous ces éléments contribuent en particulier à éviter une rotation de l'insert métallique 2 dans le moule.

Comme expliqué plus haut, l'insert métallique 2 est destiné à être surmoulé dans une pièce de véhicule automobile 4, cette dernière pouvant ensuite servir de renfort à un panneau de carrosserie, par exemple réalisé en matière thermoplastique. Il peut s'agir d'une doublure de hayon avec un ou plusieurs renforts placés au niveau des zones charnières, rotules ou serrure, afin de pallier les différents efforts produits par les équipements (vérins, butées ou joint d'étanchéité) et qui génèrent des déformations.

Ce renfort peut par exemple être surmoulé dans le panneau de carrosserie ou rapporté sur ce dernier par tout moyen connu de l'homme du métier (collage, rivetage, etc.).

De préférence, au moins une face de l'insert métallique 2 est apparente à la surface de la pièce de véhicule automobile 4. Comme expliqué plus haut, cela peut être utile pour :
- la fixation du panneau de carrosserie à une structure de véhicule, par exemple d'un hayon à une structure de véhicule au niveau d'une zone charnière, via la pièce de véhicule automobile 4 étant ici un renfort en utilisant une partie très rigide de cette dernière (i.e. l'insert métallique 2),
- l'utilisation de l'insert métallique 2 pour assurer une conductivité électrique, ou encore
- l'utilisation de l'insert métallique 2 pour aimanter la pièce d véhicule automobile 4 dans un moule pour le moulage d'un panneau de carrosserie.

On peut même envisager que plusieurs faces de plusieurs portions de l'insert métallique 2 soient visible, par exemple des deux côtés de la pièce de véhicule automobile 4. En tout état de cause, au moins une face de la portion d'appui 6, 10 et/ou de la portion de compression 8 destinées à être en contact avec le moule peut avoir la même forme que celle de la pièce de véhicule automobile 4.

Il est possible qu'une (ou plusieurs) face de l'insert métallique 2 visible à la surface de la pièce de véhicule automobile 4 comprenne au moins un évidement traversant 20. Les évidements traversants 20 peuvent dès lors avoir deux fonctions : une première pour le positionnement de l'insert métallique 2 dans un moule en interagissant avec les bossages de maintien 22 et une seconde pour la fixation d'un panneau de carrosserie comprenant un ou plusieurs renforts formés par des pièces de véhicule automobile 4 via ces évidements traversants 20. On peut par exemple citer une fixation vissée d'une charnière pour hayon par l'intermédiaire des évidements traversants 20, la présence d'une base métallique étant préférable pour rendre cette zone plus robuste.

On va maintenant décrire le procédé permettant l'obtention d'une pièce de véhicule automobile 4 en matière thermodurcissable et comprenant au moins un insert métallique 2.

La première étape consiste à placer l'insert métallique 2 ainsi que la matière thermodurcissable dans un moule, par exemple dans une matrice 26 du moule. L'insert métallique 2 peut être placé en premier dans le moule, puis la matière thermodurcissable est ajoutée (un patron a préalablement été découpé en tenant compte entre autres de la taille et de la forme de l'insert métallique. On évite ainsi de placer la matière thermodurcissable au niveau de zone de contact souhaité entre l'insert métallique 2 et le moule, comme expliqué par la suite. Le placement de l'insert métallique 2 en premier permet également à l'insert métallique 2 de monter en température pour favoriser l'accroche de la matière thermodurcissable sur l'insert métallique 2 et évite à la matière thermodurcissable de commencer à polymériser. L'ordre de placement pourrait être différent en fonction des contraintes qu'impliquerait un placement de l'insert métallique 2 avant la matière thermodurcissable dans le moule.

Le moule étant placé de manière classique à la verticale (pour un moulage en compression), l'interaction entre les évidements traversants 20 et les bossages de maintien 22 permet de garantir un bon placement de l'insert métallique 2 lors de sa mise en place dans le moule. De plus, la pièce de véhicule automobile 4 moulée comprend dès lors des orifices traversants 20 pouvant être utilisés par la suite pour le fixer au panneau de carrosserie ou fixer le panneau de carrosserie à une structure du véhicule automobile.

L'étape suivante consiste à la mise en forme de la pièce de véhicule automobile 4 par compression pendant la fermeture du moule. Il s'agit ici de l'étape de fermeture du moule qui comprend le temps de déplacement d'un poinçon 28 par rapport à une matrice 26 jusqu'à une position de fermeture finale. Le poinçon 28 du moule est refermé sur la matrice 26. La quantité de matière thermodurcissable dans le moule va déterminer l'entrefer entre la matrice 26 et le poinçon 28. L'épaisseur de la pièce de véhicule automobile 4 formée est dès lors variable, la hauteur de l'insert métallique 2 étant choisie afin d'être supérieure à l'épaisseur attendue de la pièce de véhicule automobile 4.

L'épaisseur de la pièce de véhicule automobile 4 obtenue varie donc comme énoncé ci-dessus du fait du moulage par compression. Cela est visible en comparant les deux inserts métalliques représentés sur la figure 4 (à gauche hors du moule avant moulage et à droite après moulage), au niveau desquels on observe que la hauteur 32 de l'insert métallique 2 avant moulage (partie gauche) est plus grande que la hauteur 33 de l'insert métallique 2 après moulage de la pièce de véhicule automobile 4 correspondant à l'entrefer 30 entre la matrice 26 et la poinçon 28 après fermeture du moule. L'insert métallique 2 s'étendant sur toute l'épaisseur de la pièce de véhicule automobile 4 (les portions d'appui 6 et 10 et la portion de compression 8 étant en contact avec la matrice 26 ou le poinçon 28), ce dernier va subir une déformation, cette dernière étant prévisible grâce à la présence d'au moins une zone d'affaiblissement mécanique 16.

De ce fait, l'insert métallique 2 dont on voit les portions planes 6 et 8 sur la figure 4 a subi une déformation sans que cela n'altère sa ou ses fonctions ultérieures comme cela va être décrit par la suite.
Pour obtenir cette déformation de l'insert métallique 2 dans l'épaisseur du moule selon le premier mode de réalisation de l'invention, ce dernier peut comprendre des premières surfaces d'appui 34, par exemple de la matrice 26, en regard des portions d'appui 6 et 10 et des secondes surfaces d'appui 42 du poinçon 28 en regard de la portion de compression 8, ces portions de l'insert métallique 2 pouvant demeurer visibles sur la pèce de véhicule automobile 4. Les portions d'appui 6 et 10 peuvent glisser le long des premières surfaces d'appui 34 lors de la déformation de l'insert métallique 2 selon le premier mode de réalisation de l'invention. En d'autres termes, et lors de la déformation de l'insert métallique 2 dans l'épaisseur du moule, le moule autorise un glissement de l'insert métallique 2 sur les premières surfaces d'appui 34 de la matrice 26 par ses extrémités, afin de compenser la diminution de hauteur de l'insert métallique 2 par un allongement de ce dernier, autorisé par les zones d'affaiblissement mécanique 16.

Les premières surfaces d'appui 34 de la matrice 26 peuvent être dimensionnées pour autoriser un allongement de l'insert métallique 2 dans une limite déterminée. On peut pour cela observer sur la figure 3 la présence d'une butée 36 formant la fin d'une première surface d'appui 34 de la matrice 26 dont la position par rapport à l'insert métallique 2 (i.e. la distance entre les extrémités de l'insert métallique 2 formées par les portions d'appui 6 et 10 et la butée 36) détermine l'allongement maximal autorisé de l'insert métallique 2.

La conséquence de ce glissement est observable sur la figure 4 dans laquelle la longueur initiale 38 de l'insert métallique 2 (i.e. avant moulage) est inférieure à la longueur finale 40 de l'insert métallique 2 (i.e. après moulage, ou lorsque le moule est en position finale de fermeture comme représenté à la figure 3). Cette variation de longueur est donc corrélée à la variation d'épaisseur décrite précédemment.

Selon des variantes d'un second mode de réalisation de l'invention visible sur les figures 5a à 5c et correspondant à une déformation par pliure grâce à la présence d'au moins une zone pré-pliée 18, au moins une zone d'appui 6, 10 et/ou au moins une zone de liaison 12, 14 est déformée lors de la fermeture du moule. Cette déformation correspond à une amplification de la pré-pliure des zones pré-pliées 18. La zone pré-pliée 18 peut comprendre un pli ou encore une courbure avant moulage.

Dans ce mode de réalisation, la hauteur 32 de l'insert métallique 2 avant moulage est supérieure à la hauteur 33 de ce même insert métallique 2 après moulage. Cependant, cette diminution de hauteur a été compensée par une déformation de l'insert métallique 2 au niveau de la ou des zones pré-pliées 18. Dès lors, aucun allongement de l'insert métallique 2 n'a lieu. Bien évidemment, il serait possible de combiner les premiers et second modes de réalisation de l'invention au sein d'un même insert métallique 2, avec par exemple un glissement des portions d'appui 6 et 10 contre les surfaces d'appui 34 suivi d'une déformation de l'insert métallique 2 une fois que les portions d'appui 6 et 10 sont en butée contre la butée 36.

Le moule peut comprendre au moins une seconde surface d'appui 42, par exemple du poinçon 28, pour moins une portion de compression 8 de l'insert métallique 2, une face de cette portion de compression 8 étant en contact direct avec la seconde surface d'appui 42 (et donc isolée de la matière plastique thermodurcissable par cette seconde surface d'appui 42) lors de l'étape de moulage. On observe à cet effet sur la figure 1 une représentation de la zone d'appui 44 de la seconde surface d'appui 42 du poinçon 28 sur la portion de compression 8.

Ainsi, la présence de la seconde surface d'appui 42 du poinçon 28 permet de garantir, grâce au contact direct avec la portion de compression 8 que la face de la portion de compression 8 soit visible à la surface de la pièce de véhicule automobile 4, par exemple sans être recouverte d'un voile de matière plastique, pour les raisons expliquées précédemment, par exemple pour laisser la portion de compression 8 comprenant les évidements traversants 20 accessible à la surface de la pièce de véhicule automobile 4. En observant la figure 1, on peut dire que la zone de la portion de compression 8 se situant à l'intérieur de la représentation de la zone d'appui 44 ne sera pas recouverte de matière thermodurcissable pendant le moulage de la pièce de véhicule automobile 4.

Comme illustré sur la figure 3, les secondes surfaces d'appui 42 du poinçon 28 peuvent recouvrir seulement la périphérie de la portion isolée, ici une partie la portion de compression 8.

Il est possible d'envisager que la ou les premières surfaces d'appui 34 joue également un rôle d'isolement d'au moins une partie des faces des portions d'appui 6 et 10 en contact avec elles afin de laisser ces faces accessibles à la surface de la pièce de véhicule automobile 4 moulée.

L'invention n'est pas limitée aux modes de réalisation présentés et d'autres modes de réalisation apparaîtront clairement à l'homme du métier.

Il est notamment possible que la forme de l'insert métallique 2 soit différente de celle à trois portions planes illustrée dans la présente demande. Il est également possible de modifier la forme, le nombre ou encore le positionnement des évidements traversants, des fentes de guidage ou encre des zones d'affaiblissement mécanique.

### Liste de références

2 : insert métallique
4 : pièce de véhicule automobile
6, 10 : portions d'appui
8 : portion de compression
12, 14 : portions de liaison
16 : zones d'affaiblissement mécanique
18 : zone pré-pliée
20 : évidements traversants
22 : bossage de maintien
24 : fentes de guidage
26 : matrice
28 : poinçon
30 : entrefer entre la matrice et le poinçon
32 : hauteur de l'insert métallique avant moulage
33 : hauteur de l'insert métallique après moulage
34 : première surface d'appui du moule
36 : butée
38 : longueur initiale de l'insert métallique
40 : longueur finale de l'insert métallique
42 : seconde surface d'appui du moule
44 : zone d'appui de la seconde surface d'appui du poinçon

## Revendications

1. Procédé de moulage d'une pièce de véhicule automobile (4), la pièce de véhicule automobile (4) étant réalisée en matière plastique thermodurcissable et comprenant au moins un insert métallique (2) ayant une forme lui permettant de s'étendre sensiblement dans toute l'épaisseur de la pièce de véhicule automobile (4), le procédé étant **caractérisé en ce qu'**il comprend les étapes suivantes :
- mise en place de l'insert métallique (2) et de la matière plastique thermodurcissable dans un moule, et
- moulage de la pièce de véhicule automobile (4) comprenant le renfort métallique (2) surmoulé, le renfort métallique (2) étant déformé au niveau d'au moins une zone d'affaiblissement mécanique (16) par la fermeture du moule pour le moulage de la pièce de véhicule automobile (4).

2. Procédé de moulage selon la revendication 1, dans lequel le moule comprend au moins une première surface d'appui (34) pour l'insert métallique (2), au moins une portion d'appui (6, 10) formant une partie de l'insert métallique (2) glissant le long de la première surface d'appui (34) lors de la déformation de l'insert métallique.

3. Procédé de moulage selon l'une quelconque des revendications précédentes, dans lequel au moins une portion d'appui (6, 10) formant une partie de l'insert métallique (2) et/ou une portion de liaison (12, 14) est déformée à la fermeture du moule.

4. Procédé de moulage selon la revendication 3, dans lequel la portion d'appui (6, 10) formant une partie de l'insert métallique (2) et/ou la portion de liaison (12, 14) est déformée au niveau d'au moins une zone pré-pliée (18).

5. Procédé de moulage selon la revendication 3, dans lequel la portion d'appui formant une partie de l'insert métallique et/ou la portion de liaison est déformée au niveau d'au moins une zone de moindre épaisseur.

6. Procédé de moulage selon l'une quelconque des revendications précédentes, dans lequel le moule comprend au moins une seconde surface d'appui (42) pour au moins une portion de compression (8) de l'insert métallique (2), une face de cette portion de compression (8) étant en contact directe avec la seconde surface d'appui (42) lors de l'étape de moulage.

7. Insert métallique (2) d'une pièce de véhicule automobile (4) d'un panneau de carrosserie de véhicule automobile, la pièce de véhicule automobile (4) étant réalisée en matière plastique thermodurcissable, **caractérisé en ce qu'**il comprend au moins une zone d'affaiblissement mécanique (16) agencée pour autoriser une déformation de l'insert métallique (2) dans un moule.

8. Insert métallique (2) selon la revendication 7, l'insert métallique (2) comprenant au moins une portion d'appui (6, 10) et au moins une portion de compression (8), s'étendant sur au moins deux niveaux différents ainsi qu'au moins une portion de liaison (12, 14) de la portion d'appui (6, 10) et de la portion de compression (8) entre elles.

9. Insert métallique (2) selon la revendication 8, dans lequel au moins une zone d'affaiblissement mécanique (16) est formée au niveau de la portion de liaison (12, 14) et/ou de la portion d'appui (6, 10).

10. Insert métallique (2) selon la revendication 9, dans lequel au moins une zone de moindre épaisseur est formée au niveau de la portion de liaison (12, 14) et/ou de la portion d'appui (6, 10).

11. Insert métallique (2) selon l'une quelconque des revendications 9 ou 10, dans lequel au moins une zone pré-pliée (18) est formée au niveau de la portion de liaison (12, 14) et/ou de la portion d'appui (6, 10).

12. Insert métallique (2) selon l'une quelconque des revendications 8 à 10, dans lequel la portion de liaison (12, 14) s'étend entre la portion d'appui (6, 10) et la portion de compression (8) sans être parallèle à celles-ci.

13. Insert métallique (2) selon l'une quelconque des revendications 8 à 11, dans lequel au moins une face de la portion d'appui (6, 10) et/ou de la portion de compression (8) destinées à être en contact avec le moule ont la même forme que celle de la pièce de véhicule automobile (4).

14. Insert métallique (2) selon l'une quelconque des revendications 7 à 12, l'insert métallique (2) étant un renfort métallique d'une pièce de véhicule automobile, de préférence en acier.

15. Pièce de véhicule automobile (4) de véhicule automobile réalisé en matière thermodurcissable comprenant au moins un insert métallique (2) selon l'une quelconque des revendications 7 à 13.

16. Pièce de véhicule automobile (4) selon la revendication 15, dans laquelle au moins une face de l'insert métallique (2) est visible à la surface de la pièce de véhicule automobile (4).

17. Pièce de véhicule automobile (4) selon la revendication 16, dans laquelle la face de l'insert métallique (2) visible à la surface de la pièce de véhicule automobile (4) comprend au moins un évidement traversant (20).

18. Pièce de véhicule automobile (4) selon l'une quelconque des revendications 15 à 17, la pièce de véhicule automobile (4) étant un renfort, de préférence d'une doublure de hayon de véhicule automobile.
